# FASCICULE DE BREVET EUROPEEN

(11) **EP 3 149 312 B1**
(45) Date de publication et mention de la délivrance du brevet: **03.07.2019**
(21) Numéro de dépôt: 15732030.0
(22) Date de dépôt: 22.05.2015
(51) Int. Cl.: F02C 7/224

(54) **DISPOSITIF ET PROCÉDÉ DE PRECHAUFFAGE DE CARBURANT DANS UNE TURBOMACHINE**
VORRICHTUNG UND VERFAHREN ZUM VORWÄRMEN VON BRENNSTOFF IN EINER TURBOMASCHINE
DEVICE AND METHOD FOR PRE-HEATING FUEL IN A TURBOMACHINE

(30) Priorité: 26.05.2014 FR 1454737
(43) Date de publication de la demande: 05.04.2017
(73) Titulaire: Safran Power Units, 31200 Toulouse (FR)
(72) Inventeur: DEPOUTRE, Alban, 77500 Moissy-Cramayel (FR)
(74) Mandataire: Jolly, Christophe
(86) Numéro de dépôt international: PCT/FR2015/051349
(87) Numéro de publication internationale: WO 2015/181475

(56) Documents cités:
- EP-A2- 1 067 282
- WO-A1-2007/071908
- WO-A1-2011/135240
- US-B2- 8 424 285

## Description

La présente invention concerne un dispositif de préchauffage d'un fluide ainsi qu'un procédé de mise en oeuvre du dispositif.

L'invention s'applique plus particulièrement aux moteurs d'aéronefs, c'est-à-dire aussi bien aux moteurs d'avions (turboréacteurs, turbopropulseurs) qu'aux turbomoteurs d'hélicoptères, ainsi qu'aux générateurs de puissances non propulsives.

Plus spécifiquement, le groupe auxiliaire de puissance (GAP), ou en anglais Auxiliary Power Unit (APU), désigne un groupe auxiliaire (turbogénérateur en général) destiné à produire de l'énergie (électrique, pression pneumatique) à bord des avions pour alimenter au sol les différents systèmes de bord quand les moteurs servant à la propulsion de l'avion sont arrêtés afin d'économiser le carburant ou à démarrer les moteurs de propulsion. Le GAP peut être ou non utilisé en vol. Dans le cas des avions, les GAP sont généralement positionnés à l'arrière de l'avion, dans le cône de queue et comprennent des injecteurs de carburant dans une chambre de combustion.

Le démarrage d'un groupe auxiliaire de puissance doit pouvoir être réalisé lorsqu'il est froid, c'est-à-dire après une durée prolongée d'immobilisation ou en cas de températures extérieures froides au sol ou en altitude.

Pour réaliser, dans de bonnes conditions, l'allumage de la combustion du carburant dans la chambre de combustion, il est nécessaire que le carburant injecté soit dosé dans une proportion convenable. En effet, le rapport du débit de carburant sur le débit d'air correspondant à la richesse en carburant doit être adapté. Une richesse en carburant trop faible ne permet pas l'allumage de la chambre de combustion, tandis qu'une richesse trop importante conduit à une augmentation trop importante de la température dans la chambre de combustion pouvant impacter le bon fonctionnement du groupe de puissance auxiliaire.

Il est également à noter que la forte viscosité du carburant en conditions froides dégrade la qualité du spray de carburant pulvérisé par les injecteurs et diminue les performances à l'allumage.

Pour faciliter l'allumage de la chambre de combustion, il est ainsi connu de préconfigurer les lois de régulation du débit de carburant injecté dans la chambre en fonction de la température ambiante et/ou de la température du carburant. Ces lois sont également déterminées en fonction de l'organe utilisé pour le dosage du carburant. Cependant, la détermination de ces lois est effectuée en usine et ne tient pas compte des paramètres réels du moteur en fonctionnement tels que la vitesse de rotation du rotor principal du moteur GAP, la température extérieure ou l'altitude de l'avion d'où il ressort que le débit carburant injecté n'est jamais optimal.

De plus, l'amélioration du contrôle du dosage s'avère délicate et coûteuse à mettre en place. Enfin, aucune des solutions techniques actuelles ne permet de préchauffer le carburant au démarrage ce qui permettrait de réduire la viscosité du carburant et ainsi limiterait l'impact sur le dosage du carburant.

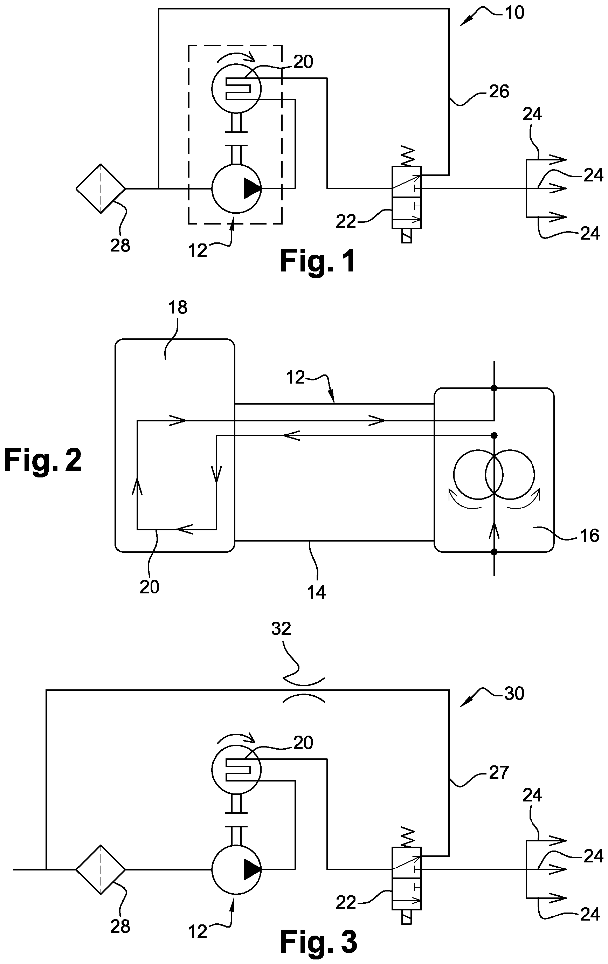

La figure 1 représente une partie d'un circuit 10 de carburant dans un GAP, le circuit 10 comprenant une pompe doseuse 12 de carburant formée d'un moteur électrique 14 relié à une pompe à engrenage 16. La pompe électrique 14 est commandée par un module 18 électronique de puissance 18 agencé en contact d'une portion du circuit 20 de carburant de manière à former un échangeur de chaleur.

Le circuit 10 comprend également une vanne déplaçable 22 entre une première position et une seconde position. Dans la première position, la vanne 22 interdit la circulation de carburant vers des injecteurs 24 de carburant et permet une recirculation du carburant dans une conduite de dérivation 26 dont l'extrémité aval débouche en amont de la pompe à engrenages 16 et aval d'un filtre à carburant 28. Dans sa seconde position, la vanne 22 autorise la circulation de carburant vers les injecteurs 24 et bloque la circulation de carburant dans la conduite de dérivation 26.

L'utilisation d'une conduite de dérivation 26 permet de créer une boucle fermée de circulation permanente de carburant lorsque la vanne 22 est dans sa première position, et au moyen de la pompe 12 fonctionnant par exemple au ralenti. Dans cette position, le carburant présent dans la boucle du circuit 10 de carburant est réchauffé par l'intermédiaire de la chaleur produite par le module 18 électronique de puissance et cédée au sein de l'échangeur de chaleur au carburant.

Toutefois, comme indiqué précédemment, le chauffage du carburant s'avère insuffisant et il s'ensuit les difficultés exposées précédemment de dosage du carburant et par suite d'allumage de la combustion du carburant dans la chambre. L'ajout d'un organe de chauffage du carburant spécifiquement prévu pour le préchauffage du carburant n'est pas recommandé puisque cela conduit à une augmentation de la masse induisant une augmentation de la consommation de carburant de l'avion.

La demande de brevet EP 1 067 282 A2 concerne un procédé de préchauffage d'un fluide, en particulier de l'huile ou du carburant.

Le brevet US 8 424 285 B2 décrit un système de refroidissement de l'électronique dans un moteur à turbine à gaz, ce système étant placé à proximité de la turbine.

L'invention a notamment pour but d'apporter une solution simple, économique et efficace à ces problèmes, permettant d'éviter au moins en partie les inconvénients précités.

A cet effet, elle concerne un dispositif de préchauffage d'un fluide pour l'alimentation d'un équipement, comprenant un circuit de fluide comportant une pompe électrique commandée par un module électronique de puissance, un échangeur de chaleur apte à échanger de la chaleur entre le module électronique de puissance et le fluide du circuit, une conduite de dérivation reliant l'aval de l'échangeur de chaleur et de la pompe électrique à l'amont de l'échangeur de chaleur et de la pompe électrique, et une vanne apte à prendre une première position dans laquelle elle interdit la circulation de fluide à un équipement et autorise la circulation de fluide dans la conduite de dérivation, et une seconde position dans laquelle elle autorise la circulation de fluide dans l'équipement et interdit la circulation de fluide dans la conduite de dérivation, le dispositif comprenant en outre des moyens d'augmentation de la différence de pression entre l'entrée et la sortie de la pompe, ces moyens étant agencés dans la conduite de dérivation.

Selon l'invention, l'intégration des moyens d'augmentation de la différence de pression permet d'augmenter la puissance consommée par la pompe électrique et donc d'augmenter la montée en température du carburant circulant en boucle lorsque la vanne est dans sa première position.

Lorsque la vanne est déplacée dans sa seconde position, le carburant est ainsi suffisamment préchauffé pour alimenter des injecteurs et permettre un allumage sans difficulté de la chambre de combustion. Ces moyens d'augmentation de la pression sont avantageusement actifs uniquement lorsque la vanne est dans sa première position de manière à ne pas avoir d'effet sur le débit de carburant alimentant l'équipement lorsque la pompe est dans sa seconde position.

Ainsi, à la différence de la technique antérieure, le démarrage de la chambre de combustion d'un GAP peut ainsi être effectué avec du carburant chaud dont la viscosité autorise son dosage de manière optimale pour l'alimentation des injecteurs ainsi que pour la bonne pulvérisation.

Idéalement, le volume de carburant recirculant est déterminé de manière à correspondre au volume de carburant nécessaire à réaliser un démarrage du GAP.

Après la phase d'allumage de la combustion, la capacité préalablement préchauffée est épuisée et la chambre est alimentée avec le carburant froid issu des réservoirs, ce qui ne pose plus de difficultés particulières car le système de régulation prend le contrôle du moteur du GAP, c'est-à-dire qu'il ajuste en permanence la quantité de carburant pulvérisé dans la chambre de combustion en fonction des paramètres de fonctionnement du moteur afin que ce dernier atteigne son régime nominal de fonctionnement.

Selon une autre caractéristique de l'invention, la vanne est agencée en aval de l'échangeur de chaleur et de la pompe.

Préférentiellement, l'échangeur de chaleur est agencé en aval de la pompe de fluide et en amont de la vanne.

Dans une réalisation pratique de l'invention, la vanne est une vanne trois voies du type à tiroir déplaçable en translation ou une électrovanne entre les première et seconde positions.

Selon une autre caractéristique de l'invention, les moyens d'augmentation de la différence de pression sont intégrés à la vanne.

Dans un mode de réalisation de l'invention, les moyens d'augmentation de la différence de pression comprennent une zone à section réduite.

Dans un autre mode de réalisation de l'invention, les moyens d'augmentation de la différence de pression comprennent un clapet configuré pour s'ouvrir à une pression seuil prédéterminée.

Un filtre peut être agencé en aval de l'extrémité aval du conduit de dérivation et en amont de la pompe électrique.

Le dispositif selon l'invention est particulièrement intéressant lorsque le fluide est du carburant et l'équipement est une rampe d'alimentation en carburant d'injecteurs dans une chambre de combustion.

L'invention concerne également un moteur d'aéronef comprenant un dispositif de préchauffage tel que décrit ci-dessus.

L'invention concerne encore un procédé de démarrage d'un moteur pour aéronef comprenant un circuit de fluide comportant une pompe électrique commandée par un module électronique de puissance, un échangeur de chaleur apte à échanger de la chaleur entre le module électronique de puissance et le fluide du circuit, une conduite de dérivation reliant l'aval de l'échangeur de chaleur et de la pompe électrique à l'amont de l'échangeur de chaleur et de la pompe électrique, et une vanne apte à prendre une première position dans laquelle elle interdit la circulation de fluide à un équipement et autorise la circulation de fluide dans la conduite de dérivation, et une seconde position dans laquelle elle autorise la circulation de fluide dans l'équipement et interdit la circulation de fluide dans la conduite de dérivation, le procédé comprenant une phase de préchauffage du carburant dans la conduite de dérivation lorsque la vanne est dans première position.

En particulier, le procédé de démarrage consiste à maintenir la vanne dans sa première position durant le temps nécessaire à ce que le fluide atteigne une température prédéterminée puis à positionner la vanne dans sa seconde position pour autoriser la circulation de fluide vers l'équipement.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1, est une vue schématique d'un circuit de carburant selon la technique antérieure et déjà décrit ;
- la figure 2 est une vue schématique à plus grande échelle de la zone délimitée en pointillés sur la figure 1 ;
- la figure 3 est une vue schématique d'un circuit de carburant selon une première réalisation de l'invention, la vanne étant dans une première position ;
- la figure 4 est une vue schématique d'un circuit de carburant selon une première réalisation de l'invention, la vanne étant dans une seconde position ;
- la figure 5 est une vue schématique d'un circuit de carburant selon une deuxième réalisation de l'invention ;
- la figure 6 est une vue schématique d'un circuit de carburant selon une troisième réalisation de l'invention ;
- la figure 7 est une vue schématique d'un circuit de carburant selon une quatrième réalisation de l'invention.

On se réfère tout d'abord à la figure 3 représentant un dispositif de préchauffage de carburant selon l'invention, les mêmes numéros de références désignant des éléments similaires ou identiques à ceux décrits en référence aux figures 1 et 2.

Le dispositif 30 selon l'invention comprend des moyens 32 d'augmentation de la différence de pression. Dans la réalisation des figures 3 à 5, ces moyens sont formés par une zone 32 à section réduite comparativement au reste de la conduite de dérivation 27.

En fonctionnement, lorsque la vanne 22 est dans sa première position (figure 3), la pompe 12 est commandée et alimentée en énergie électrique par le module de puissance 20. L'énergie dissipée par le moteur électrique 14 et le module 18 électronique de puissance est transmise au carburant par la portion 20 du circuit formant un échangeur de chaleur.

La zone à section réduite 32 permet de créer une perte de charge assurant une augmentation de la différence de pression entre l'amont et l'aval de la pompe 12, ce qui augmente la puissance consommée par la pompe et provoque une augmentation de la température du carburant.

Ainsi, selon l'invention, l'intégration d'une zone à section réduite 32 permet d'augmenter plus rapidement la température du carburant circulant dans la boucle comparativement à un système sans zone à section réduite, lorsque la vanne 22 est dans sa première position.

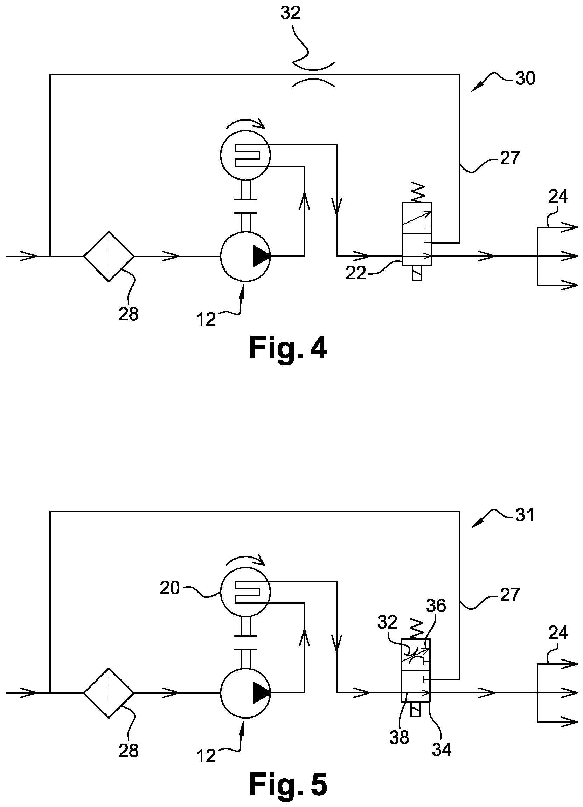

Lorsque l'opérateur souhaite effectuer un allumage de la chambre de combustion, la vanne 22 est déplacée dans sa seconde position (figure 4), le carburant réchauffé circule ainsi en direction des injecteurs de carburant, ce qui permet de garantir une viscosité plus faible du carburant et facilite le dosage et la pulvérisation du carburant alimentant la chambre.

Après l'allumage de la chambre de combustion, la quantité de carburant préalablement préchauffée est épuisée et la chambre de combustion est alimentée en carburant froid provenant des réservoirs de carburant de l'avion. L'alimentation de la chambre de combustion ne pose plus de difficultés puisque la chambre de combustion est allumée et que le système de régulation prend le contrôle du moteur, c'est-à-dire qu'il ajuste en permanence la quantité de carburant dans la chambre de combustion en fonction des paramètres du moteur afin que ce dernier atteigne son régime nominal de fonctionnement (système de contrôle en boucle fermée).

Pour augmenter la quantité de carburant chaud alimentant la chambre de combustion, le filtre 28 est ainsi positionné de sorte que l'extrémité aval de la conduite de dérivation 27 débouche en amont du filtre 28.

Dans une seconde réalisation du dispositif, représentée en figure 5, la zone à section réduite 32 est intégrée à la vanne 34. En pratique, la vanne 34 peut être du type comprenant un premier canal 36 d'alimentation de la conduite de dérivation 27 et un second canal 38 d'alimentation des injecteurs 24. La zone à section réduite 32 peut ainsi être intégrée au premier canal 36.

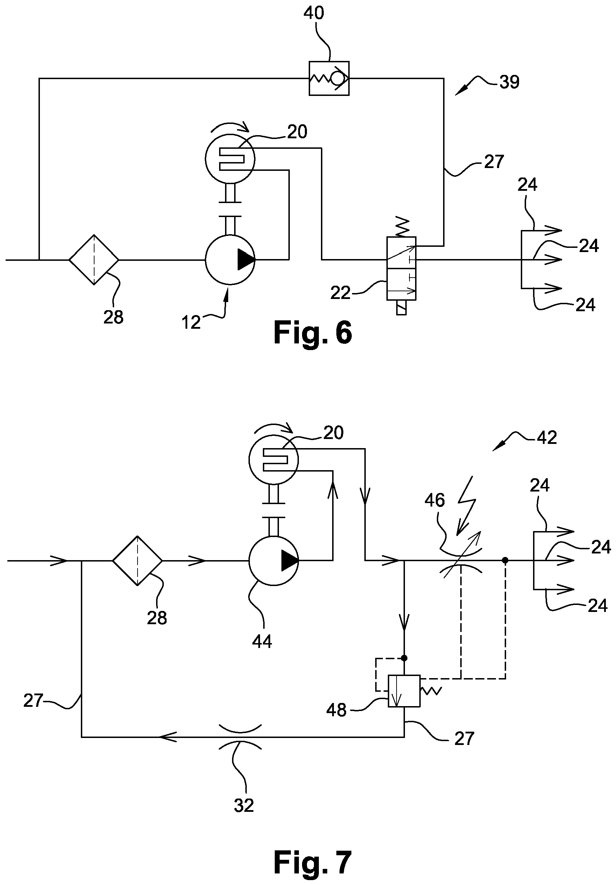

Dans une troisième réalisation du dispositif 39 représentée en figure 6, les moyens d'augmentation de la différence de pression comprennent un clapet 40 à ressort monté sur la conduite de dérivation 27 de façon à autoriser la circulation de carburant lorsque la pression est supérieure à une pression seuil et interdire la circulation de carburant lorsque la pression est inférieure à cette pression seuil.

Dans une quatrième réalisation du dispositif 42 représentée en figure 7, la pompe électrique 44 n'assure pas le dosage du carburant qui est alors assuré par un organe de dosage indépendant 46, telle qu'une servovalve, positionnée entre l'extrémité amont de la conduite de dérivation 27 et les injecteurs de carburant 24.

Dans cette réalisation, la vanne 48 est agencée dans la conduite de dérivation 27, entre la zone à section réduite 32 et l'extrémité amont de la conduite de dérivation 27.

En pratique, l'organe de dosage 46 peut être une vanne à ouverture variable et qui peut être totalement fermée pour interdire la circulation de carburant vers les injecteurs 24.

Dans cette configuration, on garantit la recirculation du carburant dans la conduite de dérivation 27 pour le réchauffer.

Lorsque la première vanne 48 interdit la circulation de carburant dans la conduite de dérivation 27, l'organe 46 autorise alors la circulation de carburant vers les injecteurs 24.

L'invention est ainsi particulièrement intéressante dans le cas d'un groupe auxiliaire de puissance mais est bien entendu également applicable à tout type de turboréacteurs ou turbomoteurs nécessitant un démarrage dans un environnement où le carburant est froid.

## Revendications

1. Dispositif (30, 31, 39, 42) de préchauffage de carburant pour l'alimentation d'un équipement, comprenant :
- un circuit de carburant comportant une pompe électrique (12, 44) commandée par un module (18) électronique de puissance, un échangeur de chaleur apte à échanger de la chaleur entre le module (18) électronique de puissance et le carburant du circuit, une conduite de dérivation (27) reliant l'aval de l'échangeur de chaleur et de la pompe électrique (12, 44) à l'amont de l'échangeur de chaleur et de la pompe électrique (12, 44), et une vanne (22, 34, 46) apte à prendre une première position dans laquelle elle interdit la circulation de carburant à un équipement (24) et autorise la circulation de carburant dans la conduite de dérivation (27) et une seconde position dans laquelle elle autorise la circulation de carburant dans l'équipement (24) et interdit la circulation de carburant dans la conduite de dérivation (27),
- le dispositif comprenant en outre des moyens d'augmentation de la différence de pression entre l'entrée et la sortie de la pompe (12, 44), ces moyens étant agencés dans la conduite de dérivation (27).

2. Dispositif selon la revendication 1, dans lequel la vanne (22, 34) est agencée en aval de l'échangeur de chaleur et de la pompe.

3. Dispositif selon l'une des revendications 1 ou 2, dans lequel l'échangeur de chaleur est agencé en aval de la pompe de carburant et en amont de la vanne (22, 34).

4. Dispositif selon l'une des revendications 1 à 3, dans lequel la vanne est une vanne (22) trois voies du type à tiroir ou une électrovanne déplaçable entre les première et seconde positions.

5. Dispositif selon la revendication 4, dans lequel les moyens d'augmentation de la différence de pression sont intégrés à la vanne (34).

6. Dispositif selon l'une des revendications 1 à 5, dans lequel les moyens d'augmentation de la différence de pression comprennent une zone à section réduite (32).

7. Dispositif selon l'une des revendications 1 à 6, dans lequel les moyens d'augmentation de la différence de pression comprennent un clapet (40) configuré pour s'ouvrir à une pression seuil prédéterminée.

8. Dispositif selon l'une des revendications 1 à 7, dans lequel un filtre (28) est agencé en aval de l'extrémité aval du conduit de dérivation et en amont de la pompe électrique (12).

9. Dispositif selon l'une des revendications 1 à 8, dans lequel l'équipement est une rampe d'alimentation en carburant d'injecteurs (24) dans une chambre de combustion.

10. Moteur d'aéronef comprenant un dispositif de préchauffage selon l'une des revendications 1 à 9.

11. Procédé de démarrage d'un moteur pour aéronef comprenant un circuit de carburant comportant une pompe électrique (12, 44) commandée par un module (18) électronique de puissance, un échangeur de chaleur apte à échanger de la chaleur entre le module (18) électronique de puissance et le carburant du circuit, une conduite de dérivation (27) reliant l'aval de l'échangeur de chaleur et de la pompe électrique (12, 44) à l'amont de l'échangeur de chaleur et de la pompe électrique (12, 44), et une vanne (22, 34, 46) apte à prendre une première position dans laquelle elle interdit la circulation de carburant à un équipement (24) et autorise la circulation de carburant dans la conduite de dérivation (27) et une seconde position dans laquelle elle autorise la circulation de carburant dans l'équipement (24) et interdit la circulation de carburant dans la conduite de dérivation (27), le procédé comprenant une phase de préchauffage du carburant dans la conduite de dérivation lorsque la vanne est dans la première position.

12. Procédé de démarrage selon la revendication 11, dans lequel la phase de préchauffage consiste à maintenir la vanne (22) dans sa première position durant le temps nécessaire à ce que le carburant atteigne une température prédéterminée puis à positionner la vanne (22) dans sa seconde position pour autoriser la circulation de carburant vers l'équipement (24).

## Patentansprüche

1. Vorrichtung (30, 31, 39, 42) zum Vorwärmen von Treibstoff zum Versorgen einer Einrichtung, enthaltend:
- ein Treibstoffsystem mit einer elektrischen Pumpe (12, 44), die über ein elektronisches Leistungsmodul (18) gesteuert wird, einem Wärmetauscher, der dazu geeignet ist, zwischen dem elektronischen Leistungsmodul (18) und dem Treibstoff des Treibstoffsystems Wärme auszutauschen, einer Bypassleitung (27), die den Bereich stromabwärts des Wärmetauschers und der elektrischen Pumpe (12, 44) mit dem Teil stromaufwärts des Wärmetauschers und der elektrischen Pumpe (12, 44) verbindet, und einem Ventil (22, 34, 46), das dazu geeignet ist, eine erste Position einzunehmen, in welcher es das Strömen von Treibstoff zu einer Einrichtung (24) verhindert und das Strömen von Treibstoff in die Bypassleitung (27) gestattet, sowie eine zweite Position, in welcher es das Strömen von Treibstoff in die Einrichtung (24) gestattet und das Strömen von Treibstoff in die Bypassleitung (27) verhindert,
- wobei die Vorrichtung ferner Mittel zum Erhöhen der Druckdifferenz zwischen dem Einlass und dem Auslass der Pumpe (12, 44) enthält, wobei diese Mittel in der Bypassleitung (27) angeordnet sind.

2. Vorrichtung nach Anspruch 1, wobei das Ventil (22, 34) dem Wärmetauscher und der Pumpe nachgelagert ist.

3. Vorrichtung nach einem der Ansprüche 1 oder 2, wobei der Wärmetauscher der Treibstoffpumpe nachgelagert und dem Ventil (22, 34) vorgelagert ist.

4. Verfahren nach einem der Ansprüche 1 bis 3, wobei das Ventil ein Dreiwegeventil (22) vom Typ mit Schieber oder ein Magnetventil ist, das zwischen der ersten und der zweiten Position verstellbar ist.

5. Vorrichtung nach Anspruch 4, wobei die Mittel zum Erhöhen der Druckdifferenz dem Ventil (34) integriert sind.

6. Vorrichtung nach einem der Ansprüche 1 bis 5, wobei die Mittel zum Erhöhen der Druckdifferenz einen Bereich mit vermindertem Querschnitt (32) enthalten.

7. Vorrichtung nach einem der Ansprüche 1 bis 6, wobei die Mittel zum Erhöhen der Druckdifferenz eine Klappe (40) enthalten, die dazu ausgelegt ist, sich bei einem vorbestimmten Schwellendruckwert zu öffnen.

8. Vorrichtung nach einem der Ansprüche 1 bis 7, wobei ein Filter (28) dem stromabwärtigen Ende der Bypassleitung nachgelagert und der elektrischen Pumpe (12) vorgelagert ist.

9. Vorrichtung nach einem der Ansprüche 1 bis 8, wobei die Einrichtung eine Zuführrampe zum Zuführen von Treibstoff zu Injektoren (24) in einer Brennkammer ist.

10. Triebwerk eines Luftfahrzeugs mit einer Vorwärmvorrichtung nach einem der Ansprüche 1 bis 9.

11. Verfahren zum Starten eines Triebwerks für Luftfahrzeuge, enthaltend ein Treibstoffsystem mit einer elektrischen Pumpe (12, 44), die über ein elektronisches Leistungsmodul (18) gesteuert wird, einem Wärmetauscher, der dazu geeignet ist, zwischen dem elektronischen Leistungsmodul (18) und dem Treibstoff des Treibstoffsystems Wärme auszutauschen, einer Bypassleitung (27), die den Bereich stromabwärts des Wärmetauschers und der elektrischen Pumpe (12, 44) mit dem Teil stromaufwärts des Wärmetauschers und der elektrischen Pumpe (12, 44) verbindet, und einem Ventil (22, 34, 46), das dazu geeignet ist, eine erste Position einzunehmen, in welcher es das Strömen von Treibstoff zu einer Einrichtung (24) verhindert und das Strömen von Treibstoff in die Bypassleitung (27) gestattet, sowie eine zweite Position, in welcher es das Strömen von Treibstoff in die Einrichtung (24) gestattet und das Strömen von Treibstoff in die Bypassleitung (27) verhindert, wobei das Verfahren eine Vorwärmphase zum Vorwärmen von Treibstoff in der Bypassleitung umfasst, wenn das Ventil in der ersten Position ist.

12. Startverfahren nach Anspruch 11, wobei die Vorwärmphase darin besteht, das Ventil (22) in seiner ersten Position für die Zeit zu halten, die erforderlich ist, damit der Treibstoff eine vorbestimmte Temperatur erreicht, dann das Ventil (22) in seine zweite Position zu bringen, um das Strömen von Treibstoff zur Einrichtung (24) zu gestatten.

## Claims

1. A device (30, 31, 39, 42) for preheating fuel for supplying an item of equipment, comprising:
- a fuel circuit comprising an electric pump (12, 44) controlled by an electronic power module (18), a heat exchanger able to exchange heat between the electronic power module (18) and the fuel in the circuit, a bypass pipe (27) connecting the downstream side of the heat exchanger and of the electric pump (12, 44) to the upstream side of the heat exchanger and of the electric pump (12, 44), and a valve (22, 34, 46) able to adopt a first position in which it prevents the circulation of fuel to an item of equipment (24) and allows the circulation of fuel in the bypass pipe (27), and a second position in which it allows the circulation of fuel in the equipment (24) and prevents the circulation of fuel in the bypass pipe (27),
- the device further comprising means for increasing the pressure difference between the inlet and outlet of the pump (12, 44), these means being arranged in the bypass pipe (27).

2. A device according to claim 1, in which the valve (22, 34) is arranged downstream of the heat exchanger and of the pump.

3. A device according to one of claims 1 or 2, in which the heat exchanger is arranged downstream of the fuel pump and upstream of the valve (22, 34).

4. A device according to one of claims 1 to 3, in which the valve is a three-way valve (22) of the spool type or a solenoid valve that can be moved between the first and second positions.

5. A device according to claim 4, in which the means for increasing the pressure difference are integrated in the valve (34).

6. A device according to one of claims 1 to 5, in which the means for increasing the pressure difference comprise a zone with a reduced cross section (32).

7. A device according to one of claims 1 to 6, in which the means for increasing the pressure difference comprise a flap valve (40) configured so as to open at a predetermined threshold pressure.

8. A device according to one of claims 1 to 7, in which a filter (28) is arranged downstream of the downstream end of the bypass pipe and upstream of the electric pump (12).

9. A device according to one of claims 1 to 8, in which the equipment is a manifold supplying fuel to injectors (24) in a combustion chamber,

10. An aircraft engine comprising a preheating device according to one of claims 1 to 9.

11. A method for starting an engine for an aircraft comprising a fuel circuit comprising an electric pump (12, 44) controlled by an electronic power module (18), a heat exchanger able to exchange heat between the electronic power module (18) and the fuel in the circuit, a bypass pipe (27) connecting the downstream side of the heat exchanger and of the electric pump (12, 44) to the upstream side of the heat exchanger and of the electric pump (12, 44), and a valve (22, 34, 46) able to adopt a first position in which it prevents the flow of fuel to an item of equipment (24) and allows the flow of fuel in the bypass pipe (27), and a second position in which it allows the flow of fuel in the equipment (24) and prevents the flow of fuel in the bypass pipe (27), the method comprising a phase of preheating the fuel in the bypass pipe when the valve is in the first position.

12. A starting method according to claim 11, in which the preheating phase consists of maintaining the valve (22) in its first position for the time necessary for the fuel to reach a predetermined temperature and then positioning the valve (22) in its second position to allow the flow of fuel to the equipment (24).
